# EUROPÄISCHE PATENTANMELDUNG

(11) **EP 4 269 823 A1**
(43) Veröffentlichungstag der Anmeldung: **01.11.2023**
(21) Anmeldenummer: 23168884.7
(22) Anmeldetag: 20.04.2023
(51) Int. Cl.: F16C 3/02, F16C 35/063, B60B 37/04, F16C 35/073

(54) **WELLE**

(30) Priorität: 27.04.2022 AT 502872022
(71) Anmelder: Siemens Mobility Austria GmbH, 1210 Wien (AT)
(72) Erfinder: Boronkai, Laszlo, 8101 Gratkorn (AT); Stine, Gerhard, 8044 Weinitzen (AT)
(74) Vertreter: Siemens Patent Attorneys

(57) **Zusammenfassung**

Die Erfindung bezieht sich auf eine Welle, insbesondere für Fahrwerke für Schienenfahrzeuge, mit zumindest einem ersten Wellenabschnitt (1) und einem zweiten Wellenabschnitt (2), wobei der zweite Wellenabschnitt eine Beschichtung (4) aufweist, der erste Wellenabschnitt von dem zweiten Wellenabschnitt abgesetzt ist und zwischen dem ersten Wellenabschnitt und dem zweiten Wellenabschnitt ein erster Übergangsbereich ausgebildet ist.

Es wird vorgeschlagen, dass der erste Übergangsbereich einen ersten Übergangsabschnitt (5) und einen zweiten Übergangsabschnitt (6) aufweist, wobei der erste Übergangsabschnitt festgewalzt ausgeführt ist, und wobei der zweite Übergangsabschnitt zwischen dem ersten Übergangsabschnitt und dem zweiten Wellenabschnitt angeordnet ist.

Dadurch werden Vereinfachungen und Qualitätsverbesserungen im Hinblick auf eine Fertigung der Welle erreicht.

## Beschreibung

Die Erfindung betrifft eine Welle, insbesondere für Fahrwerke für Schienenfahrzeuge, mit zumindest einem ersten Wellenabschnitt und einem zweiten Wellenabschnitt, wobei der zweite Wellenabschnitt eine Beschichtung aufweist, der erste Wellenabschnitt von dem zweiten Wellenabschnitt abgesetzt ist und zwischen dem ersten Wellenabschnitt und dem zweiten Wellenabschnitt ein erster Übergangsbereich ausgebildet ist.

Eine Welle ist ein Maschinenelement, welches für verschiedene technische Anwendungen eingesetzt werden kann. Beispielsweise sind Motorwellen und Getriebewellen für Maschinen etc. bekannt. Wellen können darüber hinaus z.B. auch als Radsatzwellen für Fahrwerke von Schienenfahrzeugen eingesetzt sein.

Wellen werden zur Verbesserung ihrer mechanischen Eigenschaften häufig oberflächenbehandelt. So sind beispielsweise Molybdänbeschichtungen von Wellenabschnitten, auf welche Komponenten wie z.B. Räder oder Zahnräder aufgepresst werden, zur Reduktion oder Vermeidung von Pressschäden üblich. Durch Molybdänbeschichtung solcher Wellenabschnitte, welche als Sitze für Komponenten fungieren, wird auch eine Dauerfestigkeitssteigerung durch Verringerung von Reibkorrosionseffekten bewirkt.

Weiterhin sind Festwalzverfahren bekannt, mit welchen Oberflächen von einzelnen Wellenabschnitten oder von ganzen Wellen behandelt werden, um Festigkeitseigenschaften von Randschichten der Wellenabschnitte bzw. Wellen zu verbessern. Dabei werden ausgehend von einer Oberfläche einer Welle bis zu einer definierten Tiefe unter der Oberfläche Druckeigenspannungen in die Welle eingebracht. Dadurch werden Widerstände gegen eine Bildung oder ein Wachstum von Rissen in der Welle gesteigert und somit eine Dauerfestigkeitserhöhung der Welle erreicht.

Beispielsweise ist bei Radsatzwellen von Schienenfahrzeugen eine Festigkeitssteigerung in Randschichten wichtig, da es sich bei Radsatzwellen um sicherheitsrelevante Bauteile von Schienenfahrzeugen handelt, welche in Bezug auf Umgebungseinflüsse (z.B. Steinschläge aus einem Schotterbett eines Gleiskörpers) besonders exponiert angeordnet sind. Da Radsatzwellen zudem Komponenten sind, welche aufwendige Wartungs- und Instandhaltungsvorgänge erfordern, ist eine Reduktion eines Wartungs- und Instandhaltungsaufwands erstrebenswert. Durch Festwalzen von Radsatzwellenabschnitten oder ganzen Radsatzwellen können Ultraschallprüfintervalle von Radsatzwellen verlängert werden.

Aus dem Stand der Technik ist beispielsweise die DE 1 278 274 B bekannt, in welcher ein Walzwerkzeug zum Glatt- und Festwalzen vorgedrehter Radsätze von Schienenfahrzeugen offenbart ist. Das Walzwerkzeug ist pendelnd an einem Halter aufgehängt, kann gegen eine Oberfläche eines Radsatzes gedrückt werden und weist eine Stützrolle auf, welche in einem Walzvorgang axiale Kraftkomponenten einer Walzkraft aufnimmt.

Weiterhin ist die CN 108080881 A bekannt, in welcher ein Walzwerkzeug zur Bearbeitung eines Radprofils eines Schienenfahrzeugs gezeigt ist. Eine Walzrolle ist drehbar in einer Führungsvorrichtung gelagert, die Führungsvorrichtung federnd in einem Halter.

Ferner beschreibt die EP 3 581 325 A1 ein Festwalzverfahren für Laufflächen von Rädern von Schienenfahrzeugen, bei welchem eine Walzkraft eingestellt wird, indem Drehmomente von Antriebsmotoren von Vorschubachsen von Walzwerkzeugen gesteuert werden.

Darüber hinaus beschreibt die EP 3 960 367 A1 ein Festwalzverfahren, insbesondere für Radsätze von Schienenfahrzeugen, bei welchem eine Festwalzkraft in Abhängigkeit von einer maximalen Hertzschen Pressung zwischen einem Walzwerkzeug und einem Werkstück, von einer zu verfestigenden Randschichttiefe des Werkstücks, von einer Poissonzahl eines Werkstoffs des Werkstücks sowie von einer Streckgrenze des Werkstoffs des Werkstücks eingestellt wird. Die EP 3 960 367 A1 zeigt auch einen Radsatz mit einer festgewalzten Oberfläche.

Die genannten Ansätze weisen in ihren bekannten Formen den Nachteil auf, dass eine kombinierte Anwendung von Festwalz- und Beschichtungsbehandlungen auf eine Welle nicht ersichtlich ist.

Der Erfindung liegt daher die Aufgabe zugrunde, eine einfach fertigbare Welle von hoher Qualität mit unterschiedlich oberflächenbehandelten Abschnitten anzugeben.

Erfindungsgemäß wird diese Aufgabe gelöst mit einer Welle nach Anspruch 1, bei welcher der erste Übergangsbereich einen ersten Übergangsabschnitt und einen zweiten Übergangsabschnitt aufweist, wobei der erste Übergangsabschnitt festgewalzt ausgeführt ist, und wobei der zweite Übergangsabschnitt zwischen dem ersten Übergangsabschnitt und dem zweiten Wellenabschnitt angeordnet ist.

Dadurch wird eine Welle mit bedarfsgerecht, abschnittsweise eingestellten mechanischen Eigenschaften erzielt. Der festgewalzte erste Übergangsabschnitt trägt beispielsweise zur Hemmung einer Rissbildung oder eines Risswachstums der Welle bei. Der erste Übergangsabschnitt kann beispielsweise ein Abschnitt der Welle sein, welcher aufgrund seiner Geometrie, seiner Belastung etc. eine hohe Neigung zu Rissbildung oder Risswachstum aufweist. Der zweite Wellenabschnitt kann beispielsweise als Sitz für eine mit der Welle verbindbare Komponente ausgeführt sein, für welchen durch die Beschichtung eine Dauerfestigkeitssteigerung durch Verringerung von Reibkorrosionseffekten erreicht wird.

Die Welle ist einfach fertigbar und weist eine hohe mechanische Qualität und Oberflächenqualität auf. Wenn beispielsweise der zweite Wellenabschnitt beschichtet wird, bevor eine Festwalzbearbeitung des ersten Übergangsabschnitts durchgeführt wird, so wird aufgrund des zweiten Übergangsabschnitts, welcher zwischen dem ersten Übergangsabschnitt und dem zweiten Wellenabschnitt angeordnet ist, eine Beschädigung der Beschichtung durch die Festwalzbearbeitung verhindert.

Wenn beispielsweise die Festwalzbearbeitung des ersten Übergangsabschnitts durchgeführt wird, bevor der zweite Wellenabschnitt beschichtet wird, so kann aufgrund des zweiten Übergangsabschnitts eine etwaige Entfernung überschüssiger Beschichtung, welche sich in den zweiten Übergangsabschnitt erstreckt, den festgewalzten ersten Übergangsabschnitt bzw. dessen Oberflächenspannung nur mit geringer Wahrscheinlichkeit beeinflussen, da der zweite Übergangsabschnitt als Schutzzone fungiert.

Bei einer Fertigung der erfindungsgemäßen Welle können Festwalz- und Beschichtungsvorgänge in beliebiger Reihenfolge durchgeführt werden.

Weitere vorteilhafte Ausgestaltungen der erfindungsgemäßen Welle ergeben sich aus den Unteransprüchen.

Hilfreich ist es beispielweise, wenn der zweite Übergangsabschnitt als Fase ausgebildet ist.

Durch diese Maßnahme wird ein Aufbringen oder Aufpressen einer Komponente auf den zweiten Wellenabschnitt zur Verbindung mit der Welle vereinfacht.

Es kann auch günstig sein, wenn der erste Übergangsabschnitt zumindest teilweise und zumindest in einer ersten Ebene, welche durch eine Wellenlängsachse und eine Wellenquerachse gebildet ist, gerundet ausgeführt ist.

Dadurch kann der erste Übergangsabschnitt von dem zweiten Übergangsabschnitt, wenn dieser z.B. als Fase oder zylindrisch ausgebildet ist, geometrisch getrennt werden. Darüber hinaus werden durch zumindest teilweise Abrundung des ersten Übergangsabschnitts etwaige Kerbwirkungen in dem ersten Übergangsabschnitt vermieden.

Eine Vorzugslösung wird erreicht, wenn die Beschichtung in eine Vertiefung in dem zweiten Wellenabschnitt eingefügt ist. Durch diese Maßnahme werden Risiken im Hinblick auf eine unbeabsichtigte Erstreckung der Beschichtung über den zweiten Wellenabschnitt hinaus reduziert.

In diesem Zusammenhang ist es besonders vorteilhaft, wenn die Vertiefung wannenförmig abgerundet ausgeführt ist.

Dadurch werden mechanische Spannungsgradienten in der Vertiefung oder in Übergangszonen zwischen der Vertiefung und Bereichen der Welle außerhalb der Vertiefung vermieden.

Zur Erzielung einer harten und widerstandsfähigen Oberfläche des zweiten Wellenabschnitts ist es weiterhin günstig, wenn die Beschichtung als Molybdänbeschichtung ausgebildet ist.

Eine Vorzugslösung erhält man ferner, wenn der zweite Wellenabschnitt als Sitz für eine mit der Welle verbindbare Komponente ausgebildet ist.

In diesem Zusammenhang ist es denkbar, dass die Komponente ein Lager (z.B. ein Radsatzlager), ein Rad (z.B. ein Schienenrad), ein Zahnrad (z.B. ein Großrad eines Getriebes eines Fahrwerks eines Schienenfahrzeugs) oder eine Bremsscheibe (z.B. eine Wellenbremsscheibe eines Schienenfahrzeugs) etc. ist.

Derartige Komponenten sind häufig mechanisch stark belastet, wobei entsprechende Belastungen auf den zweiten Wellenabschnitt übertragen werden. Dies führt oft zu Reibungseffekten zwischen der Komponente und dem zweiten Wellenabschnitt, welche wiederum Reibungskorrosion begünstigen und so eine Lebensdauerreduktion der Welle bewirken. Daher ist es insbesondere im Zusammenhang mit den genannten Komponenten vorteilhaft, dass erfindungsgemäß der zweite Wellenabschnitt als beschichteter Wellenabschnitt ausgeführt ist.

Ein erfolgversprechendes Anwendungsgebiet für die erfindungsgemäße Welle wird erschlossen, wenn die Welle eine Radsatzwelle ist.

Radsatzwellen sind sicherheitsrelevante Bauteile, deren Versagen katastrophale Auswirkungen haben kann. Daher sind ein sicherer Fertigungsprozess, eine hohe Qualität sowie gute mechanische Eigenschaften und Oberflächeneigenschaften, wie sie für die erfindungsgemäße Welle erreicht werden, insbesondere für Radsatzwellen bedeutsam.

Nachfolgend wird die Erfindung anhand eines Ausführungsbeispiels näher erläutert.

Es zeigt beispielhaft:

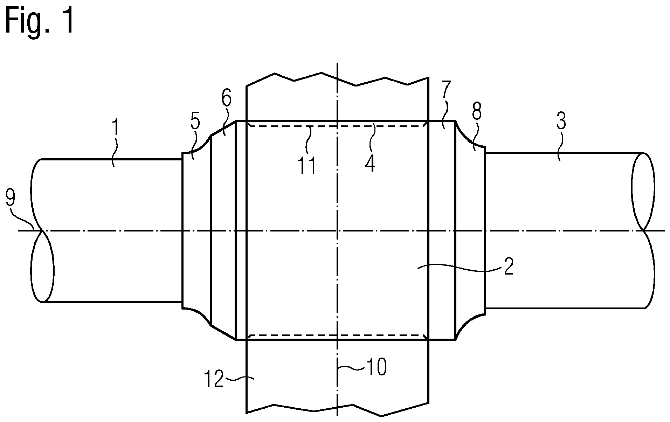

- Fig. 1:: Einen Seitenriss eines Ausschnitts aus einer beispielhaften Ausführungsvariante einer erfindungsgemäßen Welle mit molybdänbeschichteten und festgewalzten Abschnitten.

Fig. 1 zeigt einen Seitenriss eines Ausschnitts aus einer beispielhaften Ausführungsvariante einer erfindungsgemäßen Welle.

Die Welle ist als Radsatzwelle eines Fahrwerks eines Schienenfahrzeugs ausgeführt und weist einen ersten Wellenabschnitt 1, einen zweiten Wellenabschnitt 2 und einen dritten Wellenabschnitt 3 sowie weitere, in Fig. 1 nicht gezeigte Wellenabschnitte auf. Der erste Wellenabschnitt 1, der zweite Wellenabschnitt 2 und der dritte Wellenabschnitt 3 sind zylindrisch ausgeführt. Erfindungsgemäß ist es jedoch auch denkbar, z.B. den zweiten Wellenabschnitt 2 konisch auszubilden etc.

Der zweite Wellenabschnitt 2 ist dem ersten Wellenabschnitt 1 und dem dritten Wellenabschnitt 3 zwischengeordnet und weist eine als Molybdänbeschichtung ausgebildete Beschichtung 4 auf. Die Beschichtung 4 ist gleichmäßig auf eine zylindrische Mantelfläche des zweiten Wellenabschnitts 2 aufgetragen.

Der erste Wellenabschnitt 1 und der dritte Wellenabschnitt 3 sind von dem zweiten Wellenabschnitt 2 abgesetzt, d.h. weisen kleinere Wellendurchmesser als der zweite Wellenabschnitt 2 auf.

Zwischen dem ersten Wellenabschnitt 1 und dem zweiten Wellenabschnitt 2 ist ein erster Übergangsbereich ausgebildet, zwischen dem zweiten Wellenabschnitt 2 und dem dritten Wellenabschnitt 3 ein zweiter Übergangsbereich.

Die Welle ist einstückig und aus Stahl ausgebildet.

Der erste Übergangsbereich weist einen ersten Übergangsabschnitt 5 und einen zweiten Übergangsabschnitt 6 auf, der zweite Übergangsbereich einen dritten Übergangsabschnitt 7 und einen vierten Übergangsabschnitt 8. Der erste Übergangsabschnitt 5 und der vierte Übergangsabschnitt 8 sind festgewalzt ausgeführt, wodurch die Welle in Randschichten des ersten Übergangsabschnitts 5 und des vierten Übergangsabschnitts 8 kaltverfestigt ist.

Der erste Übergangsabschnitt 5 und der vierte Übergangsabschnitt 8 sind in einer ersten Ebene, welche durch eine Wellenlängsachse 9 der Welle und eine Wellenquerachse 10 der Welle gebildet ist, sowie in bezüglich der ersten Ebene um die Wellenlängsachse 9 verdrehten weiteren Ebenen gerundet ausgeführt. Der erste Übergangsabschnitt 5 und der vierte Übergangsabschnitt 8 sind als torusförmige Abschnitte mit der Wellenlängsachse 9 als Mittenachse ausgeführt. Erfindungsgemäß ist es auch vorstellbar, für den ersten Übergangsabschnitt 5 und den vierten Übergangsabschnitt 8 Bögen mit variierenden Radien etc. vorzusehen.

Der zweite Übergangsabschnitt 6 ist zwischen dem ersten Übergangsabschnitt 5 und dem zweiten Wellenabschnitt 2 angeordnet, der dritte Übergangsabschnitt 7 zwischen dem zweiten Wellenabschnitt 2 und dem vierten Übergangsabschnitt 8. Der zweite Übergangsabschnitt 6 und der dritte Übergangsabschnitt 7 sind weder beschichtet noch festgewalzt ausgeführt.

Der zweite Übergangsabschnitt 6 ist als Fase bzw. konisch ausgebildet, der dritte Übergangsabschnitt 7 zylindrisch. Erfindungsgemäß ist es auch denkbar, dass der zweite Übergangsabschnitt 6 zylindrisch ausgebildet ist.

Der erste Wellenabschnitt 1 ist an den ersten Übergangsabschnitt 5, der erste Übergangsabschnitt 5 an den zweiten Übergangsabschnitt 6 und der zweite Übergangsabschnitt 6 an den zweiten Wellenabschnitt 2 angrenzend angeordnet. Der dritte Übergangsabschnitt 7 ist an einer gegenüber dem zweiten Übergangsabschnitt 6 angeordneten Seite an den zweiten Wellenabschnitt 2 angrenzend angeordnet.

Der vierte Übergangsabschnitt 8 ist an den dritten Übergangsabschnitt 7 angrenzend angeordnet, der dritte Wellenabschnitt 3 an den vierten Übergangsabschnitt 8. Zwischen dem ersten Wellenabschnitt 1 und dem ersten Übergangsabschnitt 5 sowie zwischen dem vierten Übergangsabschnitt 8 und dem dritten Wellenabschnitt 3 sind Absätze bzw. Wellenschultern angeordnet.

Die Beschichtung 4 ist im Bereich einer Vertiefung 11 in dem zweiten Wellenabschnitt 2 auf den zweiten Wellenabschnitt 2 aufgetragen bzw. in die Vertiefung 11 eingefügt, wodurch die Beschichtung 4 bündig mit Oberkanten der Vertiefung 11 abschließt. Die Vertiefung 11 ist wannenförmig abgerundet ausgeführt und erstreckt sich über die Mantelfläche des zweiten Wellenabschnitts 2.

Der beschichtete zweite Wellenabschnitt 2 ist als Sitz einer mit der Welle verbundenen Komponente 12, welche in Fig. 1 ausschnittsweise und geschnitten dargestellt ist, ausgebildet. Diese Komponente 12 ist als Radsatzlager des Fahrwerks ausgeführt, wobei das Radsatzlager über seinen Lagerinnenring über den als Fase ausgebildeten zweiten Übergangsabschnitt 6 auf den zweiten Wellenabschnitt 2 aufgepresst ist.

Erfindungsgemäß ist es jedoch auch vorstellbar, dass die Komponente 12 ein Rad, ein Zahnrad (z.B. ein mit der Radsatzwelle verbundenes Großrad eines Getriebes des Fahrwerks) oder eine mit der Radsatzwelle verbundene Wellenbremsscheibe etc. ist.

### Liste der Bezeichnungen

- 1: Erster Wellenabschnitt
- 2: Zweiter Wellenabschnitt
- 3: Dritter Wellenabschnitt
- 4: Beschichtung
- 5: Erster Übergangsabschnitt
- 6: Zweiter Übergangsabschnitt
- 7: Dritter Übergangsabschnitt
- 8: Vierter Übergangsabschnitt
- 9: Wellenlängsachse
- 10: Wellenquerachse
- 11: Vertiefung
- 12: Komponente

## Patentansprüche

1. Welle, insbesondere für Fahrwerke für Schienenfahrzeuge, mit zumindest einem ersten Wellenabschnitt (1) und einem zweiten Wellenabschnitt (2), wobei der zweite Wellenabschnitt (2) eine Beschichtung (4) aufweist, der erste Wellenabschnitt (1) von dem zweiten Wellenabschnitt (2) abgesetzt ist und zwischen dem ersten Wellenabschnitt (1) und dem zweiten Wellenabschnitt (2) ein erster Übergangsbereich ausgebildet ist, **dadurch gekennzeichnet, dass** der erste Übergangsbereich einen ersten Übergangsabschnitt (5) und einen zweiten Übergangsabschnitt (6) aufweist, wobei der erste Übergangsabschnitt (5) festgewalzt ausgeführt ist, und wobei der zweite Übergangsabschnitt (6) zwischen dem ersten Übergangsabschnitt (5) und dem zweiten Wellenabschnitt (2) angeordnet ist.

2. Welle nach Anspruch 1, **dadurch gekennzeichnet, dass** der zweite Übergangsabschnitt (6) als Fase ausgebildet ist.

3. Welle nach Anspruch 2, **dadurch gekennzeichnet, dass** zwischen dem zweiten Wellenabschnitt (2) und einem von dem zweiten Wellenabschnitt (2) abgesetzten dritten Wellenabschnitt (3) ein zweiter Übergangsbereich ausgebildet ist, welcher einen an den zweiten Wellenabschnitt (2) angrenzenden, zylindrisch ausgebildeten dritten Übergangsabschnitt (7) umfasst.

4. Welle nach Anspruch 1, **dadurch gekennzeichnet, dass** der zweite Übergangsabschnitt (6) zylindrisch ausgebildet ist.

5. Welle nach einem der Ansprüche 1 bis 4, **dadurch gekennzeichnet, dass** der erste Übergangsabschnitt (5) zumindest teilweise und zumindest in einer ersten Ebene, welche durch eine Wellenlängsachse (9) und eine Wellenquerachse (10) gebildet ist, gerundet ausgeführt ist.

6. Welle nach einem der Ansprüche 1 bis 5, **dadurch gekennzeichnet, dass** der erste Wellenabschnitt (1) an den ersten Übergangsabschnitt (5) angrenzend angeordnet ist, der erste Übergangsabschnitt (5) an den zweiten Übergangsabschnitt (6) angrenzend angeordnet ist, und der zweite Übergangsabschnitt (6) an den zweiten Wellenabschnitt (2) angrenzend angeordnet ist.

7. Welle nach einem der Ansprüche 1 bis 6, **dadurch gekennzeichnet, dass** die Beschichtung (4) in eine Vertiefung (11) in dem zweiten Wellenabschnitt (2) eingefügt ist.

8. Welle nach Anspruch 7, **dadurch gekennzeichnet, dass** die Vertiefung (11) wannenförmig abgerundet ausgeführt ist.

9. Welle nach einem der Ansprüche 1 bis 8, **dadurch gekennzeichnet, dass** die Beschichtung (4) als Molybdänbeschichtung ausgebildet ist.

10. Welle nach einem der Ansprüche 1 bis 9, **dadurch gekennzeichnet, dass** der zweite Wellenabschnitt (2) als Sitz für eine mit der Welle verbindbare Komponente (12) ausgebildet ist.

11. Welle nach Anspruch 10, **dadurch gekennzeichnet, dass** die Komponente (12) ein Lager ist.

12. Welle nach Anspruch 10, **dadurch gekennzeichnet, dass** die Komponente (12) ein Rad ist.

13. Welle nach Anspruch 10, **dadurch gekennzeichnet, dass** die Komponente (12) ein Zahnrad ist.

14. Welle nach Anspruch 10, **dadurch gekennzeichnet, dass** die Komponente (12) eine Bremsscheibe ist.

15. Welle nach einem der Ansprüche 1 bis 14, **dadurch gekennzeichnet, dass** die Welle eine Radsatzwelle ist.
